# EUROPÄISCHE PATENTSCHRIFT

(11) **EP 0 760 437 B1**
(45) Veröffentlichungstag und Bekanntmachung des Hinweises auf die Patenterteilung: **12.06.2002**
(21) Anmeldenummer: 96110483.3
(22) Anmeldetag: 28.06.1996
(51) Int. Cl.: F16F 7/10, B62D 37/04

(54) **Vorrichtung zum Bedämpfen von Karosserieschwingungen**
Device for damping car body vibrations
Dispositif d'amortissement des vibrations de carrosserie

(30) Priorität: 31.08.1995 DE 19532039
(43) Veröffentlichungstag der Anmeldung: 05.03.1997
(73) Patentinhaber: Dr.Ing.h.c. F. Porsche Aktiengesellschaft, 70435 Stuttgart (DE)
(72) Erfinder: Jöst, Rainer, 75417 Mühlacker (DE); Paleczek, Josef, 71262 Weil der Stadt (DE)

(56) Entgegenhaltungen:
- EP-A- 0 538 608
- WO-A-92/02382
- CH-A- 271 285
- DE-A- 4 340 007
- DE-A- 4 413 447
- US-A- 3 917 246
- US-A- 5 456 341
- PATENT ABSTRACTS OF JAPAN vol. 016, no. 494 (M-1324), 13.Oktober 1992 & JP 04 181040 A (KAYABA IND CO LTD), 29.Juni 1992,

## Beschreibung

Die Erfindung bezieht sich auf eine Vorrichtung zum Bedämpfen von Karosserieschwingungen nach dem Oberbegriff des Anspruchs 1.

Aus der DE 33 16 177 A 1 ist eine Vorrichtung zum Tilgen mechanischer Schwingungen bekannt. Dieser Tilger besteht aus einem Schwingungsaufnehmer und einem in einer Flüssigkeitskammer hin- und herschwingenden Kolben. Desweiteren ist aus der DE 29 33 726 C 2 ein Schwingungstilger bekannt, der aus einer elastisch an einem Trägerteil gehaltenen Masse besteht.

Aus Patent Abstracts of Japan, Vol. 16 Nr. 494 (JP-A-04-181040) geht ein dynamische Dämpfer hervor, bei dem eine Dämpfermasse zwischen zwei Gaspolstern angeordnet ist. Die Gaspolster sind durch eine mit der Masse verbundene Membran getrennt. Zur Erhöhung des Druckes in den Gaspolstern und damit zur Veränderung der Eigenfrequenz des Dämpfers sind an den Gaspolstern hydraulisch beaufschlagbare Zylinder vorgesehen, mit denen das Volumen der Gaspolster einstellbar ist.

Die EP 0 538 608 A1 zeigt eine Vorrichtung zur Tilgung von Torsionsschwingungen, bei der eine elastisch gehaltenen Masse in einem Cabriolet an einem Windschutzscheibenrahmen gehalten ist. Zur optimalen Tilgung weist der Tilger eine Eigenfrequenz auf, die im Bereich der Torsionseigenfreuenz des Fahrzeuges liegt.

Aus der Die DE 44 13 447 A1 ist aktiv gesteuertes Feder - Masse - System zur Bedämpfung einer vibrierenden Struktur bekannt geworden. Durch ein Stellglied kann die Lage des Fußpunktes des Feder-Masse - Systems oder alternativ die Kopplung zwischen Feder und Masse verändert werden. In einem Regelkreis wird die Position des Stellgliedes durch einen Differentialgeber erfasst und mit der Position der Masse verglichen. Die Position der Masse wird dabei über einen an der Masse angeordneten Beschleunigungsgeber oder in äquivalenter Weise durch einen Kraftgeber bestimmt, der am Angriffspunkt des Feder - Masse - Systems mit der vibrierenden Struktur angeordnet ist. Durch innerhalb des Regelkreises vorgesehenen Algorithmen ist eine Veränderung der Eigenfrequenz des Feder - Masse - Systems entweder durch eine virtuelle Veränderung der Federkonstante oder durch eine virtuelle Veränderung der Masse möglich.

Aufgabe der Erfindung ist es, den Einsatzbereich der Vorrichtung zur Tilgung von Torsionsschwingungen zu erweitern.

Diese Aufgabe wird erfindungsgemäß durch die kennzeichnenden Merkmale des Anspruches 1 gelöst. Weitere vorteilhafte Merkmale beinhalten die Unteransprüche.

Die mit der Erfindung hauptsächlich erzielten Vorteile bestehen darin, daß ein oder mehrere Tilger dem Fahrzeugaufbau in der Weise zugeordnet sind, daß die während des Fahrbetriebs auftretenden Torsionsbewegungen des Fahrzeugaufbaus über den oder diese Tilger abgebaut bzw. in einem bestimmten Frequenzbereich keine Schwingungen mehr auftreten. Hierzu ist die als Aktuator ausgebildete Tilgermasse hydraulisch entsprechend ansteuerbar, wozu eine Einrichtung mit einem elektronischer Regler dient, der u.a. mit einem Servoventil zur Drucksteuerung versehen ist. Zur Ansteuerung werden die Karosserieschwingungen beispielsweise im vorderen Scheibenrahmen über einen Beschleunigungssensor gemessen und entsprechende Signale an den Regler weitergeleitet, der das Servoventil somit schwingungsabhängig steuert. Der aktive Tilger ist hinsichtlich des abzudeckenden Frequenzbereiches variabel, so daß Schwankungen der Karosserietorsionsschwingungen aufgrund der Fahrgeschwindigkeit, der Temperatur, des Cabriolet-Verdeckzustandes, der Beladung und der Serienstreuung hinsichtlich der Karosseriesteifigkeit usw. ausgeregelt werden können.

Die Karosserieschwingungen können mit einem oder mehreren hydraulisch unterstützten Tilgern bedämpft werden. Die gesamte Einheit des aktiven Tilgers besteht aus der Tilgermasse (Aktuator), dem Servoventil, der Speicherladeeinheit und der Regelungselektronik. Diese Elemente sind vorzugsweise als eine Baueinheit zusammengefaßt und an einem Punkt der Karosserie mit maximaler Auslenkung der Torsionsschwingungen des Fahrzeuges z.B. an einen Eckpunkt im Heck des Fahrzeuges angeordnet.

Die wirksame Masse des Tilgers befindet sich in einer Ausführung in einem Zylinder und ist auf einer feststehenden Stange oszillierend entsprechend der zu tilgenden Schwingungen bewegbar. Die Masse kann bei vergleichbarer Wirksamkeit deutlich geringer gehalten werden, als bei einem passiven Tilger. Zur Lagebestimmung der Tilgermasse ist ein Wegsensor vorgesehen. Die zu minimierenden Karosserieschwingungen werden über den Beschleunigungssensor des Fahrzeugs erfaßt und diese aufgenommenen Signale werden zum elektronischen Regler abgegeben, der somit entsprechend das Servoventil ansteuern kann und die Tilgermasse in eine oszillierende Bewegung versetzt wird.

Der aktive Tilger ist hinsichtlich der abzudeckenden Frequenzbereiche variabel, so daß Schwankungen der Karosserietorsionsschwingungen aufgrund der verschiedenen vorkommenden Fahrzeugzustände während der Fahrt ausgeregelt werden können, um ein den Komfort des Fahrzeugs beeinträchtigendes Karosseriezittern zu dämpfen.

Ausführungsbeispiele der Erfindung sind in der Zeichnung dargestellt und wird im folgenden näher beschrieben.

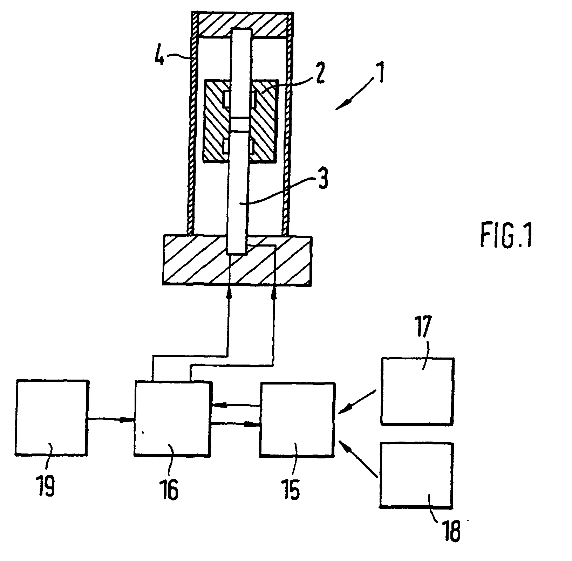

Es zeigt
- Fig. 1: eine schematische Darstellung eines Schwingungstilgers mit den Schaltungs- und Steuerungselementen,

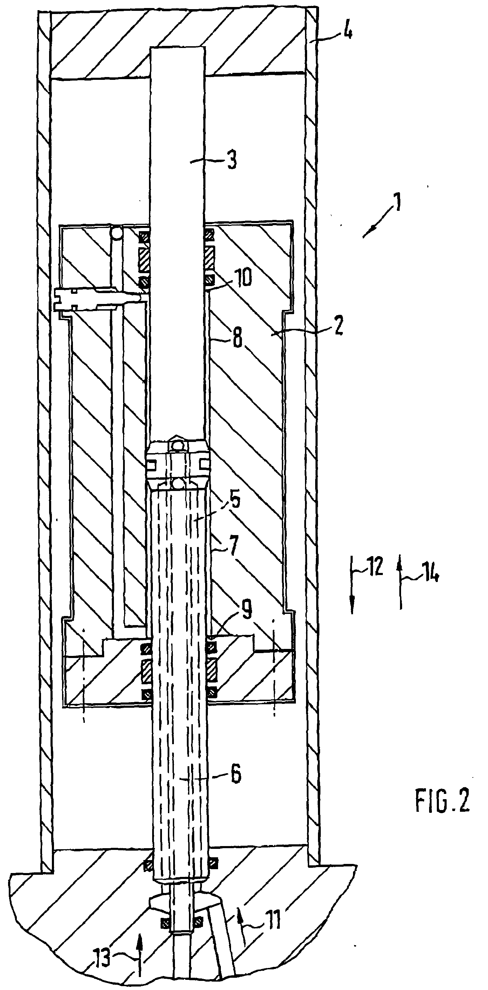

- Fig. 2: einen Schnitt durch einen Schwingungstilger,
- Fig. 3: eine schematische Darstellung der aus einem Teil des Fahrzeuges bestehenden Tilgermasse, wie z.B. einem Reserverad und
- Fig. 4: eine Anordnung einer Tilgermasse in einem Träger eines Fahrzeuges, am Beispiel eines Längsträgers dargestellt.

Der aktive Tilger umfaßt einen als Tilgermasse 2 ausgebildeten Aktuator, welcher beispielsweise auf einer feststehenden Stange 3 in einem Zylinderrohr 4 verschiebbar angeordnet sein kann. Die Tilgermasse 2 wird hydraulisch angesteuert, wozu in der Stange 3 separate Zuführkanäle 5, 6 und in der Tilgermasse 2 entsprechende Ringräume 7, 8 mit Druckflächen 9, 10 in der Tilgermasse 2 vorgesehen sind. Bei einem hydraulischen Druck in Pfeilrichtung 11 wird die Tilgermasse 2 abwärts und in Pfeilrichtung 12 wird bei einem hydraulischen Druck in Pfeilrichtung 13 die Tilgermasse 2 in Pfeilrichtung 14 aufwärts bewegt. Die Bewegungen der Tilgermasse 2 sind bei einer Bedämpfung oszillierend, wobei die Geschwindigkeit in Abhängigkeit von den Schwingungen erfolgt. Es wird vorzugsweise eine Frequenz von 14 bis 18 Hz abgedeckt.

Die Tilgermasse 2 kann in weiterer Ausgestaltung der Erfindung auch aus Teilen des Fahrzeuges, die eine gewisse Masse beinhalten, bestehen. So kann die Tilgermasse aus einer Batterie, einem Reserverad 2a, dem Bordwerkzeug oder aus dem kompletten Hydraulikaggregat bestehen. Das Bordwerkzeug ist zu diesem Zweck in einem Kasten oder dergleichen zusammengefaßt und im Fahrzeug bewegbar gelagert.

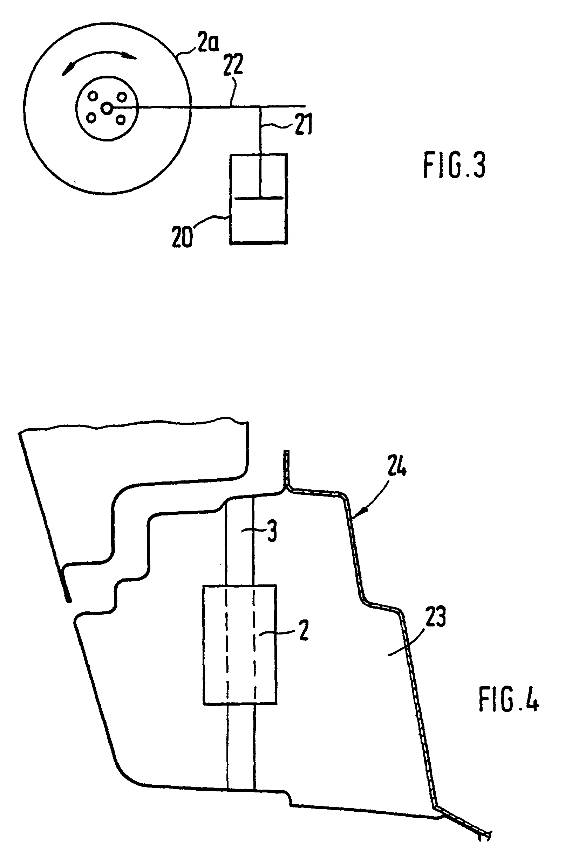

Diese Teile des Fahrzeuges sind entsprechend im Fahrzeug elastisch oder dergleichen gelagert und mit einem Druckzylinder 20 verbunden, der über eine Stange 21 beispielsweise mit einem Hebel 22 des Teiles 2a zusammenwirkt, wie schematisch in Fig. 3 gezeigt ist.

Die Tilgermasse 2 kann auch in einem Hohlraum 23 eines Trägers 24, wie einem Längsträger, Querträger oder in einem Fahrschemel angeordnet sein. Desweiteren ist es möglich die ansteuerbare Tilgermasse 2 in einem vorderen Scheibenrahmen eines Cabrioletfahrzeuges anzuordnen. In diesem Fall ist die Tilgermasse 2 querliegend angeordnet, d.h. die oszillierende Bewegung erfolgt in Querrichtung des Fahrzeuges.

Um den Schwingungstilger 1 zu betreiben, wird ein speziell programmierter elektronischer Regler 15 verwendet, welcher über ein schnell schaltendes Servo- bzw. Proportionalventil 16 den hydraulischen Druck in der Tilgermasse 2 regelt. Über einen Beschleunigungssensor 17, der beispielsweise im vorderen Scheibenrahmen des Fahrzeugs angeordnet sein kann, werden die zu minimierenden Karosserieschwingungen erfaßt und dem elektronischen Regler 15 zugeführt. Zur Lagebestimmung der Tilgermasse 2 befindet sich am Tilger 1 ein Wegsensor 18. Zur Bereitstellung des Hydraulikmediums dient eine Speicher-Ladeeinheit 19.

Der gesamte Tilger 1 mit Speicher-Ladeeinheit 19, Servoventil 16, Regler 15 und Wegsensor 18 ist als Baueinheit zusammengefaßt und komplett ins Fahrzeug einbaubar. Der aktive Tilger 1 ist hinsichtlich seiner Eigenfrequenz so variabel auf die Reglerfrequenz abstimmbar, daß Schwankungen der Karosserietorsionsschwingungen, verursacht durch verschiedene Zustände, wie beispielsweise die Fahrgeschwindigkeit, die Temperatur, den Verdeckzustand, die Belastung und die Serienstreuung der Karosseriesteifigkeit, ausgeregelt wird.

## Patentansprüche

1. Vorrichtung zum Bedämpfen von Karosserieschwingungen eines Kraftfahrzeugs, insbesondere eines Cabriolets, mittels mindestens eines im Fahrzeugaufbau angeordneten Schwingungstilgers, **dadurch gekennzeichnet, daß**
- eine hydraulisch bewegbare Tilgermasse (2) des Tilgers (1) über eine Einrichtung (15 bis 19) zur Bewegung der Tilgermasse (2) ungefedert mit dem Fahrzeugaufbau verbunden ist,
- unmittelbar am Fahrzeugaufbau ein Beschleunigungssensor (17) zur Erfassung von Torsionsschwingungen des Fahrzeugaufbaus angeordnet ist, und
- die Einrichtung (15 bis 19) zur Bewegung der Tilgermasse (2) in Abhängigkeit von den durch den Beschleunigungssensor (17) erfassten Torsionsschwingungen in mindestens einem Frequenzband oszillierend angesteuert ist.

2. Vorrichtung nach Anspruch 1, **dadurch gekennzeichnet, daß** eine Drucksteuerung in der Tilgermasse (2) über einen elektronischen Regler (15), welcher ein Servoventil (16) umfaßt, durchführbar ist.

3. Vorrichtung nach Anspruch 1 oder 2, **dadurch gekennzeichnet, daß** die Tilgermasse (2) auf einer feststehenden Stange (3) in einem Zylinderrohr (4) angeordnet ist.

4. Vorrichtung nach Anspruch 1 oder einem der vorhergehenden Ansprüche, **dadurch gekennzeichnet, daß** für die hydraulische Bewegung der Tilgermasse (2) in der Stange (3) separate Zufuhrkanäle (5, 6) für ein Hydraulikmedium angeordnet sind und die Zufuhrkanäle (5, 6) über zugeordnete Ringräume (7, 8) in der Tilgermasse (2) in Wirkverbindung mit Druckflächen (9, 10) der Ringräume (7, 8) in der Tilgermasse (2) stehen.

5. Vorrichtung nach einem der Ansprüche 2 bis 4, **dadurch gekennzeichnet, daß** der elektronische Regler (15) Signale des am Fahrzeugaufbau angeordneten Beschleunigungssensors (17) zur Erfassung der Torsionsschwingungen aufnimmt und über das angesteuerte Servoventil (16) der hydraulische Druck an den Druckflächen (9, 10) der Tilgermasse (2) entsprechend regelbar ist.

6. Vorrichtung nach Anspruch 1 oder einem der vorhergehenden Ansprüche, **dadurch gekennzeichnet, daß** der Tilgermasse (2) ein Wegsensor (18) zur Erfassung der Istlage zugeordnet ist und die Signale über diese Istlage dem elektronischen Regler zuführbar sind.

7. Vorrichtung nach einem der Ansprüche 2 bis 6, **dadurch gekennzeichnet, daß** der Tilger (1) mit einer Speicherladeeinheit (19), dem Regler (15) und dem Servoventil (16) aus einer Baueinheit besteht.

8. Vorrichtung nach Anspruch 1 einem der Ansprüche 2 bis 7, **dadurch gekennzeichnet, daß** der Tilger (1) in Abhängigkeit von Signalen, über die Fahrgeschwindigkeit, die Temperatur, den Zustand des Fahrzeugverdecks und die Beladung vom Regler (15) über das Servoventil (16) ansteuerbar ist.

9. Vorrichtung nach Anspruch 1 oder einem der vorhergehenden Ansprüche, **dadurch gekennzeichnet, daß** die aktive Tilgermasse (2) aus einem im Fahrzeug gehaltenen Teil, wie einem Reserverad, einer Batterie, Bordwerkzeug oder dem Hydraulikaggregat besteht und diese Teile oszillierend bewegbar über einen Druckzylinder (20) hydraulisch ansteuerbar sind.

10. Vorrichtung nach einem der Ansprüche 3 bis 9, **dadurch gekennzeichnet, daß** die Tilgermasse (2) auf der Stange (3) in einen Hohlraum (23) eines Trägers (24) des Fahrzeuges vertikal ausgerichtet angeordnet ist.

11. Vorrichtung nach Anspruch 1 oder einem der vorhergehenden Ansprüche, **dadurch gekennzeichnet, daß** die Tilgermasse (2) querliegend in einem Scheibenrahmen eines Cabrioletfahrzeuges angeordnet ist und diese quer zum Fahrzeug oszillierend bewegbar ansteuerbar ist.

## Claims

1. A device for damping bodywork vibrations on a motor vehicle, in particular a cabriolet. by means of at least one vibration absorber arranged in the vehicle body. **characterized in that**
- an hydraulically movable mass (2) of the absorber (1) is connected to the vehicle body in a non-sprung manner by way of a device (15 to 19) for moving the absorber mass (2).
- an acceleration sensor (17) for detecting torsion vibrations on the vehicle body is arranged directly on the vehicle body, and
- the device (15 to 19) for moving the absorber mass (2) is actuated in an oscillating manner as a function of the torsion vibrations - detected by the acceleration sensor (17) - in at least one frequency band.

2. A device according to Claim 1, **characterized in that** the pressure can be controlled in the absorber mass (2) by way of an electronic regulator (15) which comprises a servo valve (16).

3. A device according to Claim 1 or 2. **characterized in that** the absorber mass (2) is arranged on a fixed rod (3) in a cylindrical tube (4).

4. A device according to Claim 1 or one of the preceding Claims, **characterized in that** separate supply ducts (5, 6) for an hydraulic medium are arranged in the rod (3) for the hydraulic movement of the absorber mass (2). and the supply ducts (5, 6) are operatively connected to thrust faces (9, 10) of associated annular spaces (7. 8) in the absorber mass (2) by way of the annular spaces (7, 8) in the absorber mass (2).

5. A device according to one of Claims 2 to 4, **characterized in that** the electronic regulator (15) receives signals from the acceleration sensor (17) - arranged on the vehicle body - for detecting the torsion vibrations, and the hydraulic pressure at the thrust faces (9, 10) of the absorber mass (2) can be regulated accordingly by way of the actuated servo valve (16).

6. A device according to Claim 1 or one of the preceding Claims, **characterized in that** a path sensor (18) for detecting the actual position is associated with the absorber mass (2). and the signals can be supplied to the electronic regulator by way of the said actual position.

7. A device according to one of Claims 2 to 6. **characterized in that** the absorber (1) with a storage load device (19), the regulator (15) and the servo valve (16) comprises a structural unit.

8. A device according to Claim 1 or one of Claims 2 to 7, **characterized in that** the absorber (1) can be actuated as a function of signals by way of the speed of travel, the temperature, the state of the vehicle roof and loading of the regulator (15) by way of the servo valve (16).

9. A device according to Claim I or one of the preceding Claims, **characterized in that** the active absorber mass (2) comprises a part held in the vehicle, such as a spare wheel, a battery, a vehicle tool kit or the hydraulic unit, and these parts can be actuated hydraulically by way of a thrust cylinder (20) so as to be movable in an oscillating manner.

10. A device according to one of Claims 3 to 9. **characterized in that** the absorber mass (2) is arranged orientated vertically on the rod (3) in a cavity (23) in a support (24) of the vehicle.

11. A device according to Claim 1 or one of the preceding Claims, **characterized in that** the absorber mass (2) is arranged situated transversely in a window frame of a cabriolet vehicle and it can be actuated so as to be movable in an oscillating manner transverse to the vehicle.

## Revendications

1. Dispositif destiné à amortir des oscillations de la carrosserie d'un véhicule automobile, en particulier d'un cabriolet, au moyen d'au moins un amortisseur d'oscillations disposé dans la carrosserie du véhicule, **caractérisé en ce que**
- une masse d'amortissement (2), déplaçable hydrauliquement, de l'amortisseur (1), est reliée, sans l'intermédiaire de ressorts, à la carrosserie du véhicule, à travers un dispositif (15 à 19) pour le déplacement de la masse d'amortissement (2),
- un capteur d'accélération (17), destiné à détecter des oscillations de torsion de la carrosserie du véhicule, est disposé directement sur la carrosserie du véhicule, et
- le dispositif (15 à 19) pour le déplacement de la masse d'amortissement (2) est commandé en oscillation, dans au moins une bande de fréquences, en fonction des oscillations de torsion détectées par le détecteur d'accélération (17).

2. Dispositif selon la revendication 1, **caractérisé en ce qu'**on peut exécuter une commande de la pression dans la masse d'amortissement (2), au moyen d'un régulateur électronique (15) qui comprend une servo-vanne (16).

3. Dispositif selon la revendication 1 ou 2, **caractérisé en ce que** la masse d'amortissement (2) est disposée sur une tige (3) fixe dans un tube cylindrique (4).

4. Dispositif selon la revendication 1 ou l'une des revendications précédentes, **caractérisé en ce que** pour le déplacement hydraulique de la masse d'amortissement (2) sont disposés, dans la tige (3), des canaux d'amenée (5, 6) séparés pour un fluide hydraulique, et les canaux d'amenée (5, 6) sont en liaison active, par des espaces annulaires (7, 8) associés de la masse d'amortissement (2), avec des surfaces de pression (9, 10) des espaces annulaires (7, 8) de la masse d'amortissement (2).

5. Dispositif selon l'une des revendications 2 à 4, **caractérisé en ce que** le régulateur électronique (15) reçoit des signaux du capteur d'accélération (17), disposé sur la carrosserie du véhicule et destiné à détecter les oscillations de torsion, et, au moyen de la servo-vanne (16) commandée, la pression hydraulique sur les surfaces de pression (9, 10) de la masse d'amortissement (2) peut être réglée en conséquence.

6. Dispositif selon la revendication 1 ou l'une des revendications précédentes, **caractérisé en ce qu'**à la masse d'amortissement (2) est associé un capteur de distance (18) destiné à détecter la position réelle, et les signaux relatifs à cette position réelle peuvent être envoyés au régulateur électronique.

7. Dispositif selon l'une des revendications 2 à 6, **caractérisé en ce que** l'amortisseur (1) avec le chargeur d'accumulateur (19), le régulateur (20) et la servo-vanne (16) constituent un ensemble constructif.

8. Dispositif selon l'une des revendications 2 à 7, **caractérisé en ce que** l'amortisseur (1) peut être commandé en fonction de signaux, relatifs à la vitesse de marche, la température, l'état de la capote du véhicule et la charge, par le régulateur (15) et par l'intermédiaire de la servo-vanne (16).

9. Dispositif selon la revendication 1 ou l'une des revendications précédentes, **caractérisé en ce que** la masse d'amortissement active (2) est constituée d'un élément maintenu dans le véhicule, tel qu'une roue de réserve, une batterie, un outil de bord ou le groupe hydraulique, et ces éléments peuvent être commandés hydrauliquement en oscillations au moyen d'un cylindre de pression (20).

10. Dispositif selon l'une des revendications 3 à 9, **caractérisé en ce que** la masse d'amortissement (2) est disposée, orientée verticalement, sur la tige (3), dans une cavité (23) d'un support (24) du véhicule.

11. Dispositif selon la revendication 1 ou l'une des revendications précédentes, **caractérisé en ce que** la masse d'amortissement (2) est disposée transversalement dans un cadre de vitre d'un cabriolet et celle-ci peut être commandée en oscillation, transversalement au véhicule.
